# EUROPÄISCHE PATENTANMELDUNG

(11) **EP 1 388 691 A1**
(43) Veröffentlichungstag der Anmeldung: **11.02.2004**
(21) Anmeldenummer: 03012989.4
(22) Anmeldetag: 07.06.2003
(51) Int. Cl.: F16J 15/12

(54) **Verfahren zur Erzeugung eines Dichtbereiches an einer Flachdichtung, sowie Flachdichtung**

(30) Priorität: 05.08.2002 DE 10235742
(71) Anmelder: Federal-Mogul Sealing Systems GmbH, 57562 Herdorf (DE)
(72) Erfinder: Klinner, Manfred, 53844 Troisdorf (DE)

(57) **Zusammenfassung**

Verfahren zur Erzeugung eines Dichtbereiches an einer aus mindestens einem Trägerblech (2) bestehenden Flachdichtung, insbesondere Zylinderkopfdichtung für Verbrennungskraftmaschinen, beinhaltend mindestens eine, insbesondere für Flüssigkeitsdurchtritte vorgesehene Durchgangsöffnung (4,5,6), indem in die mit einer vorgebbaren Kontur versehene Durchgangsöffnung (4,5,6) mindestens ein aus Metall bestehendes Teil (9) eingelegt und zur Bildung mehrerer mit geringem Abstand zueinander positionierter einzelner Durchgangsöffnungen (4,5,6) zwischen den Randbereichen des Trägermaterials (12) und des Teiles (9) ein, insbesondere aus Elastomermaterial bestehendes Dichtprofil (12) angeformt wird.

## Beschreibung

Die Erfindung betrifft ein Verfahren zur Erzeugung eines Dichtbereiches an einer aus mindestens einem Trägerblech bestehenden Flachdichtung insbesondere Zylinderkopfdichtungen für Verbrennungskraftmaschinen, beinhaltend mindestens eine, insbesondere für Flüssigkeitsdurchtritte vorgesehene Durchgangsöffhung. Unterschiedliche Medien an abzudichtenden Flanschflächen, wie z.B. Zylinderkopfdichtungen und deren Durchtrittsöffnungen von beispielsweise Öl und

Wasser oder auch Drucköl und drucklosem Öl werden heute mit der Stahl-Elastomertechnologie dergestalt abgedichtet, dass an das Trägerblech der Flachdichtung Elastomerprofile angespritzt werden, die durch das Trägerblech getrennt sind. Das Trägerblech übernimmt dabei die Aufgabe, die Druckdifferenzen der verschiedenen abzudichtenden Medien zu übertragen. Das Elastomermaterial alleine würde dem nicht standhalten.

Der DE-A 39 30 117 ist eine metallische Flachdichtung, insbesondere Zylinderkopfdichtung, zu entnehmen, die eine metallische Dichtungsplatte mit Durchgangsöffnungen für die Brennräume, die Befestigungsschrauben, die Kühlflüssigkeit und das Schmieröl aufweist, bei der mindestens eine der Flüssigkeitsöffnungen durch einen Einsatz aus Weichstoffmaterial gebildet ist. Die Weichstoffeinsätze werden durch beidseitig auf der metallischen Dichtungsplatte und auf den Randzonen der Weichstoffeinsätze aufliegende und mit der metallischen Dichtungsplatte und/oder den Weichstoffeinsätzen kraftschlüssig verbundene Metallbleche an der metallischen Dichtungsplatte befestigt.

Der DE-A 40 10 991 ist eine metallische Flachdichtung, insbesondere Zylinderkopfdichtung, zu entnehmen, mit in mindestens eine der Durchgangsöffnungen eingesetzten Einsatzdichtungsringen aus metallisch verstärktem Weichstoffmaterial und am Außenumfang radial vorstehenden Vorsprüngen. Die Vorsprünge sind von den metallischen Verstärkungsringen gebildet. In den Öfiiiungsrandbereich der Metallblechplatte sind korrespondierend zu den Vorsprüngen der Einsatzdichtungsringe die Vorsprünge aufnehmende Vertiefungen eingeprägt. Die Einsatzdichtungsringe sind in die Durchgangsöffhungen durch Verstemmen der Vertiefungsränder gegen Herausfallen gesichert.

Durch die US-A 5,267,740 ist eine Metallzylinderkopfdichtung mit integrierten Dichthilfen bekannt geworden. Zur Erzeugung von medienführenden Durchgangslöchern werden selbige zum Teil mit ineinanderlaufenden Stanzbereichen versehen, wobei Verbindungsbereiche zwischen dem Trägermaterial und dem Hilfsmittel gegeben sind. Das Hilfsmittel wird dann mit einem seinen eigenen Randbereich sowie den Randbereich des umgebenden Trägermateriales übergreifenden Dichtprofil versehen.

Die im Stand der Technik beschriebenen Möglichkeiten zur Abdichtung sind vom Fertigungsablauf aufwendig und werden beispielsweise bei der Abdichtung zweier unterschiedliche Drücke aufweisender Medien den dort auftretenden Anforderungen nicht gerecht.

Der Erfindung liegt die Aufgabe zugrunde, einerseits ein Verfahren vorzuschlagen, mit welchem im Bereich mindestens einer Durchgangsöffnung mehrere, mit geringem Abstand zueinander vorgesehene Durchgangsöffnungen, insbesondere Flüssigkeitsdurchgangsöffnungen, erzeugt werden können, das gegenüber dem Stand der Technik einfacher handhabbar ist. Ferner soll an einer Flachdichtung eine Lösung zur Reduzierung von nutzbaren Abdichtbreiten sowie dem Widerstehen von Druckdifferenzen der Medien an diesen abzudichtenden Flanschflächen vorgestellt werden.

Diese Aufgabe wird gelöst durch ein Verfahren gemäß Patentanspruch 1.

Vorteilhafte Weiterbildungen des erfindungsgemäßen Verfahrens sind den zugehörigen verfahrensgemäßen Unteransprüchen zu entnehmen.

Diese Aufgabe wird auch gelöst durch eine Flachdichtung gemäß Patentanspruch 6. Vorteilhafte Weiterbildungen der erfindungsgemäßen Flachdichtung sind den zugehörigen gegenständlichen Unteransprüchen zu entnehmen.

Durch das separate Metalleinlegeteil wird eine Verstärkung des später anzuspritzenden Elastomers gebildet. Am Metallteil können entweder bereits die für den späteren Einbau der Flachdichtung, insbesondere Zylinderkopfdichtung lochtechnischen Gegebenheiten bereits angeformt sein oder aber in einem weiteren Arbeitsschritt, beispielsweise durch Stanzen, erzeugt werden. Das Elastomerprofil wird nach erfolgtem Einlegen lediglich von einer Seite an dieses Teil angespritzt, wobei der Randbereich der umgebenden Durchgangsöffnung bedarfsweise übergriffen, ansonsten ein bündiger Abschluß mit dem jeweiligen Randbereich gebildet wird.

Mit dem Erfindungsgegenstand ist es nun möglich in eine einzelne (größere) Durchgangsöffnung vorgebbarer Kontur mindestens ein Metallteil ebenfalls vorgebbarer Kontur einzulegen und nach dem Anspritzen des Dichtbereiches die einzelnen Durchgangsöffnungen zu erhalten, die mit dem gewünschten geringen Abstand zueinander vorgesehen sind, ohne jedoch beim Flüssigkeitsdurchtritt unterschiedlicher Drücke Probleme mit sich zu bringen.

Zur Sicherstellung, dass durch den Anspritzvorgang des Elastomers und dem dabei prozeßbedingt auftretenden hohen Druck wird das Metalleinlegeteil vorteilhafterweise durch Formschluß in Position gehalten. Dies kann beispielsweise durch maschinenseitig vorgesehene, in entsprechende Ausnehmungen des Metalleinlegeteiles eingreifende Stifte realisiert werden. Im Anschluß an die Positionierung sowie Fixierung des Einlegeteiles kann selbiges an den öffnungsseitigen Kanten angespritzt werden und bildet dann über das Elastomermaterial mit dem Randbereich des Trägerbleches der Dichtung eine Einheit.

Durch diese Maßnahme können bei den so erzeugten eng nebeneinanderliegenden benachbarten Durchgangslöchern, die hier nicht gegebenen nutzbaren Abdichtbreiten in einfacher Weise angeformt werden. Gleichzeitig werden durch das eingelegte und ein Verstärkungselement bildende Metallteil die Druckdifferenzen der verschiedenen abzudichtenden Medien übertragen.

Zum Einsatz kann das wirtschaftliche Edge-Bonding-Spritzverfahren, das beispielsweise mit Transfer- oder Injection-Molding-Maschinen realisiert wird, zum Einsatz gelangen. Gegenüber dem bis dato eingesetzten On-Top-Molding-Verfahren sind beim Edge-Bonding-Verfahren geringere Arbeitsschritte gegeben.

Neben einlagigen Flachdichtungen, insbesondere Zylinderkopfdichtungen, ist der Erfindungsgegenstand auch bei mehrlagigen Flachdichtungen, insbesondere Zylinderkopfdichtungen, anwendbar.

Der Erfindungsgegenstand ist anhand eines Ausführungsbeispieles in der Zeichnung dargestellt und wird wie folgt beschrieben. Es zeigen:
- Figur 1: Prinzipsskizze einer Flachdichtung, beinhaltend eine einzelne Durchgangsöffnung vorgebbarer Kontur
- Figur 2: Prinzipskizze der Flachdichtung gem. Fig. 1, beinhaltend mehrere eng nebeneinanderliegende Durchgangsöffhungen
- Figur 3: Prinzipsskizze der Flachdichtung gem. Fig. 2, beinhaltend mehrere einzelne gegeneinander abgedichtete Durchgangsöffhungen
- Figur 4 u. 5: Querschnitte durch den Dichtbereich der Durchgangsöffhungen gemäß Figur 3 in vergrößerter Darstellung.

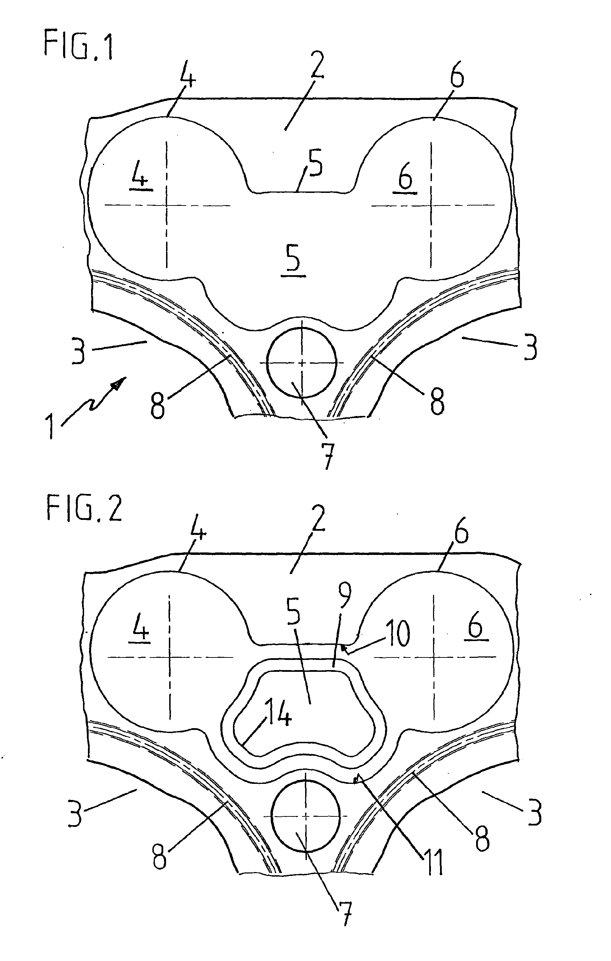

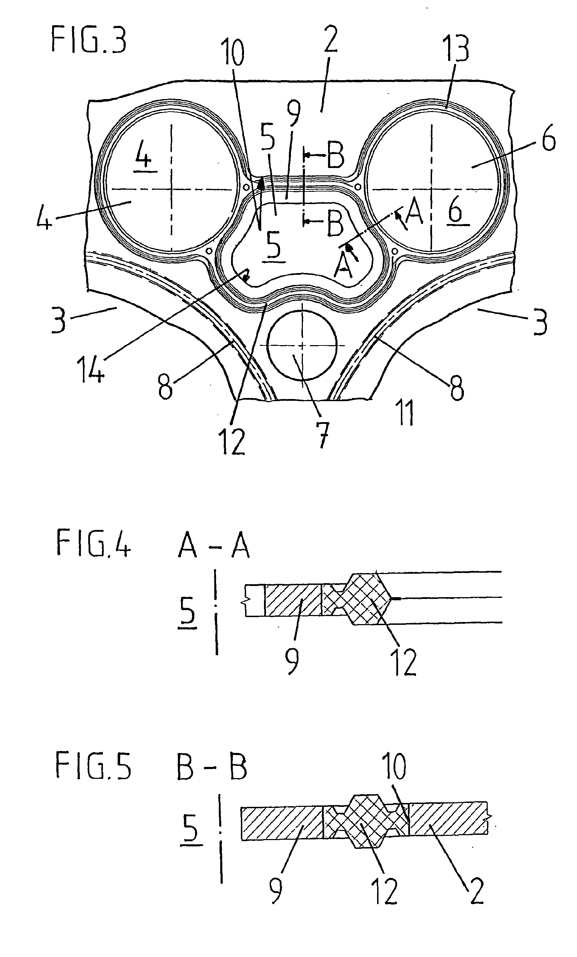

Figur 1 zeigt als Prinzipsskizze eine Flachdichtung, insbesondere eine Zylinderkopfdichtung 1, in diesem Beispiel beinhaltend ein einlagiges Trägerblech 2, das neben den Brennraumdurchgangsöffnungen 3 eine einzelne (größere) für Medien Durchgangsöffhung 4,5,6 vorgebbarer Kontur, sowie Schrauben oder Bolzendurchgangslöcher 7 beinhaltet. Die Dichtbereiche für die Brennraumdurchgangsöffnungen 3 sind lediglich angedeutet und mit dem Bezugszeichen 8 versehen. Dieser Zustand ist die Ausgangssituation für das erfindungsgemäße Verfahren, was in den Figuren 2 und 3 dargestellt ist und beschrieben wird.

Figur 2 zeigt als Prinzipsskizze die Zylinderkopfdichtung 1 gem. Figur 1, beinhaltend das Trägerblech 2, die Brennraumdurchgangsöffnungen 3, die Schrauben- oder Bolzendurchgangslöcher 7 sowie den Dichtbereich 8. Zur Erzeugung mehrerer einzelner mit geringem Abstand zueinander vorgesehen Durchgangsöffhungen 4,5,6 für Flüssigkeiten wird in die einzelne (größere) Durchgangsöffung 4,5,6 gem. Figur 1 in diesem Beispiel lediglich ein einzelnes aus Metall bestehendes Einlegeteil 9 vorgebbarer Kontur mit vorgebbarem Abstand zu dem umgebenen Randbereich 10 des Trägerbleches 2, respektive der Durchgangsöffungen 4,5,6 eingebracht. Innerhalb der Form einer nicht weiter dargestellten Spritzmaschine wird das Einlegeteil 9 fixiert und so gegen Verrutschen gesichert.

Figur 3 zeigt als Prinzipsskizze die Zylinderkopfdichtung 1 gem. Figur 2. Im Bereich einer Spritzmaschine wird durch das Edge-Bonding-Spritzverfahren am Rand des Trägerbleches 2 und am Rand des Einlegeteiles 9 Elastomermaterial zu Bildung des Dichtprofiles 12 angespritzt. Der Randbereich 10 des Trägerbleches 2 bzw. der Rand des Einlegeteiles 9 kann ausführungsabhängig bedarfsweise zumindest partiell durch das Elastomermaterial übergriffen werden. Durch diese Maßnahme wird ein Dichtprofil 12 zwischen dem Einlegeteil 9 und dem Trägerblech 2 erzeugt. In einem Herstellungsschritt wird neben dem Dichtprofil 12 auch gleichzeitig der übrige umlaufend ausgebildete Dichtabschnitt 13 erzeugt, so dass eine gute Abdichtung sämtlicher der einzelnen Durchgangsöffnungen 4,5,6 erzielt werden kann. Das Einlegeteil 9 kann vor dem Einlegen in die einzelne Durchgangsöffhung 4,5,6 gem. Figur 1 bereits mit einer Lochung 14 mit der für den Betriebszustand notwendigen Kontur versehen worden sein oder aus Vollblech gebildet werden, aus dem dann in einem späteren Arbeitsschritt, die notwendige Lochung 14, ausgestanzt wird. Die Fixierung des Einlegeteiles 9 erfolgt formschlüssig, beispielsweise durch maschinenseitig vorgesehene in entsprechende Ausnehmungen des Einlegeteiles 9 eingreifende Stifte (nicht dargestellt).

Sollte ein Übergreifen des Elastomermateriales am Rand Rand des Einlegeteiles 9 nicht gewünscht werden, so kann auch eine bündige Anspritzung an den Rand erfolgen.

Die Figuren 4 und 5 zeigen Schnitte A-A sowie B-B durch Figur 3. Erkennbar sind das Einlegteil 9, das Trägerblech 2, die Randbereiche 10,11 und das dazwischen vorgesehene durch das Edge-Bonding-Spritzverfahren angeformte Dichtprofil 12.

## Patentansprüche

1. Verfahren zur Erzeugung eines Dichtbereiches an einer aus mindestens einem Trägerblech (2) bestehenden Flachdichtung, insbesondere Zylinderkopfdichtung für Verbrennungskraftmaschinen, beinhaltend mindestens eine, insbesondere für Flüssigkeitsdurchtritte vorgesehene Durchgangsöffnung (4,5,6), indem in die mit einer vorgebbaren Kontur versehene Durchgangsöffnung (4,5,6) zunächst mindestens ein aus Metall bestehendes Einlegeteil (9) mit definiertem Abstand zum Randbereich (10; 11) des Trägerbleches (2) derart positioniert wird, dass mehrere einen geringen Abstand zueinander aufweisende einzelne Durchgangsöffnungen (4,5,6) gebildet werden, und dass anschließend ein insbesondere aus Elastomermaterial bestehendes Dichtprofil (12) sowohl an den Rand des Teiles (9) als auch des Trägerbleches (2) angeformt wird so dass die einzelnen Duchgangsöffnungen (4,5,6) über dass Dichtprofil (12) voneinander getrennt sind und das Teil (9) ausschließlich über das Dichtprofil (12) mit dem Randbereich (10,11) des Trägerbleches (2) verbunden wird.

2. Verfahren nach Anspruch 1, **dadurch gekennzeichnet, dass** das Dichtprofil (12) insbesondere durch das Edge-Bonding-Spritzverfahren angeformt wird.

3. Verfahren nach Anspruch 1 oder 2, **dadurch gekennzeichnet, dass** das insbesondere aus Metall bestehende Einlegeteil (9) vor dem Anformen des Dichtprofiles (12) innerhalb der Durchgangsöfinung (5) mit vorgebbarem Abstand zum umgebenden Randbereich (10) positioniert und anschließend gegen Verrutschen fixiert wird.

4. Verfahren nach einem der Ansprüche 1 bis 3, **dadurch gekennzeichnet, dass** die Fixierung durch mindestens einen werkzeugseitig vorgesehenen, in ein korrespondierendes Loch im Einlegeteil (9) eingreifenden Stift erfolgt.

5. Verfahren nach einem der Ansprüche 1 bis 4, **dadurch gekennzeichnet, dass** das Einlegeteil (9) im Anschluß an die Anformung des Dichtbereiches (12) mit einer den Kriterien des Einbauzustandes der Flachdichtung entsprechenden Lochung (14) versehen wird.

6. Flachdichtung, insbesondere Zylinderkopfdichtung für Verbrennungskraftmaschinen mit mindestens einem Trägerblech (2), beinhaltend mindestens eine, eine vorgebbare Kontur aufweisende Durchgangsöffnung (4,5,6), insbesondere Flüssigkeitsdurchgangsöffnung, im Bereich derer zur Erzeugung mehrerer mit geringem Abstand zueinander positionierter einzelner Druchgangsöffnungen, mindestens ein, insbesondere aus Metall bestehendes Einlegeteil (9) angeordnet ist, wobei am Rand, des Einlegeteiles (9) und an den Randbereichen (10,11) des Trägerbleches (2) ein daran angeformtes, insbesondere aus Elastomermaterial bestehendes Dichtprofil (12) vorgesehen ist.

7. Flachdichtung nach Anspruch 6, **dadurch gekennzeichnet, dass** das Einlegeteil (9) mit einer Lochung (14) versehbar ist, die erst nach Anformung des Dichtprofiles (12) erzeugt ist.
